(19) Europäisches Patentamt
European Patent Office
Office européen des brevets

(11) **EP 4 152 353 B1**

(12) **EUROPEAN PATENT SPECIFICATION**

(45) Date of publication and mention
of the grant of the patent:
**10.04.2024 Bulletin 2024/15**

(21) Application number: **22191446.8**

(22) Date of filing: **22.08.2022**

(51) International Patent Classification (IPC):
**H01F 27/28** (2006.01)   **H01F 27/24** (2006.01)
**H01F 3/14** (2006.01)   **H01F 17/04** (2006.01)

(52) Cooperative Patent Classification (CPC):
**H01F 27/2823; H01F 3/14; H01F 17/045;
H01F 27/24;** Y02B 70/10; Y02T 10/70;
Y02T 10/7072; Y02T 90/14

(54) **COUPLING INDUCTOR**

KOPPLUNGSINDUKTOR

BOBINE DE COUPLAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.09.2021 JP 2021151752**

(43) Date of publication of application:
**22.03.2023 Bulletin 2023/12**

(73) Proprietor: **Yazaki Corporation
Tokyo (JP)**

(72) Inventor: **Maruyama, Akinori
Susono-shi, Shizuoka, 410-1194 (JP)**

(74) Representative: **Grünecker Patent- und
Rechtsanwälte
PartG mbB
Leopoldstraße 4
80802 München (DE)**

(56) References cited:
**WO-A1-2021/168797     CN-B- 104 410 257
JP-A- 2021 019 030**

**Description**

BACKGROUND OF THE INVENTION

Technical Field

The present invention relates to a coupling inductor.

Background Art

CN 104 410 257 B discloses a passive component integrated device of an LCL filter, comprising a plurality of PCB coils around a central section of a magnetic core having said central section and an outer section. The plurality of coils are respectively provided on both sides of a central portion the central section. The winding directions of the coils on one side are different from the winding direction of the coils on the other side.

WO 2021/168797 A1 discloses common mode choke comprising a core and four coils wound around a central section the core. There are provided two input sections and two output sections.

JP 2021 019030 A discloses a coupling inductor (and a power factor correction circuit comprising said coupling inductor) comprising two coils wound around a central section of a magnetic core, said core having said central section and an outer section. The two coils have a same winding direction and opposite magnetic flux direction in the central section.

An on-board charger for a vehicle is equipped with an interleaved PFC (power factor correction) circuit in order to efficiently convert a high AC electric power into a DC power. Such an interleaved PFC circuit necessitates two inductors. For the reason of the need for compact on-board chargers, it is desired to provide more compact inductors.

Therefore, an interleaved PFC circuit with a coupling inductor is proposed (for example Patent Document 1). The coupling inductor is formed by two coils wound around a core with opposite polarities so that magnetic fluxes generated by the two coils cancel each other and magnetic flux in the core is thus reduced. In this manner, the coupling inductor enables the core to be reduced in size, i.e., more compact inductors to be obtained.

Citation List

Patent Literature

Patent Document 1: JP 2015-201642 A

SUMMARY OF THE INVENTION

In the case where a coupling inductor is used for a PFC circuit, it is not possible to use a dust core as the core for the coupling inductor because a ripple current with a doubled operating frequency flows therethrough. For this reason, a ferrite core is usually used in the coupling inductor for a PFC circuit. A ferrite core has a small saturation magnetic flux density, which is 1/3 of the saturation magnetic flux density of the dust core.

Therefore, Patent Document 1 discloses that magnetic saturation is avoided by providing a plurality of gap in core of a coupling inductor. However, it is difficult to dissipate heat from a coupling inductor having the above-described configuration. In addition, such a coupling inductor requires an accuracy for assembly. Therefore, the technique disclosed in Patent Document 1 is not practical.

Therefore, an objective of the present invention is to provide a compact coupling inductor.

In order to achieve the above-mentioned objective, a coupling inductor according to claim 1 is provided.

The present invention enables a compact coupling inductor to be provided.

BRIEF DESCRIPTION OF THE DRAWINGS

FIG. 1 shows an exterior view of a coupling inductor according to an embodiment of the present invention;

FIG. 2 shows the coupling inductor with one of two outer sections C2 removed;

FIG. 3 shows a relation between a central section C1 and the outer sections C22 of a core as well as coils L1-L4;

FIG. 4A shows a connection relation between the coils L1-L4;

FIG. 4B shows a connection relation between the coils L1-L4;

FIG. 5 shows an example of a conventional coupling inductor;

FIG. 6 shows changes of the central section C1 of the core in its cross section and in size of gaps G1-G3 in the case of varying a number of turns NG for coils LG1 and LG2 in the conventional coupling inductor;

FIG. 7 shows an equivalent magnetic circuit for the coupling inductor according to the embodiment of the present invention; and

FIG. 8 shows changes of the central section C1 of the core in its cross section and in size of gaps G1-G3 in the case of varying a second number of turns N2 in the coupling inductor according to the embodiment of the present invention.

DETAILED DESCRIPTION OF THE PREFERRED EMBODIMENTS

<Configuration of a coupling inductor>

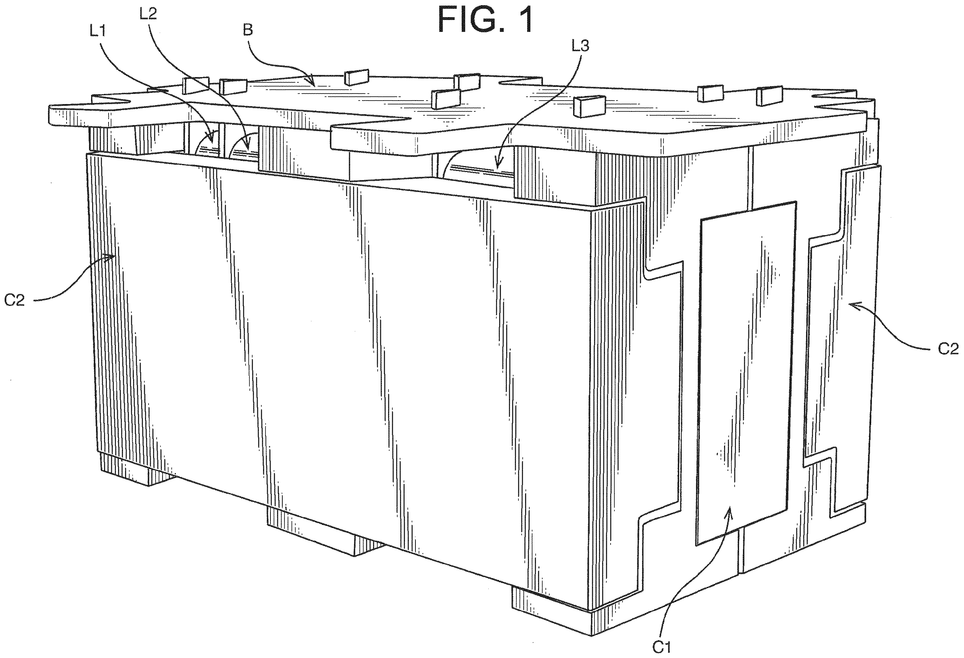

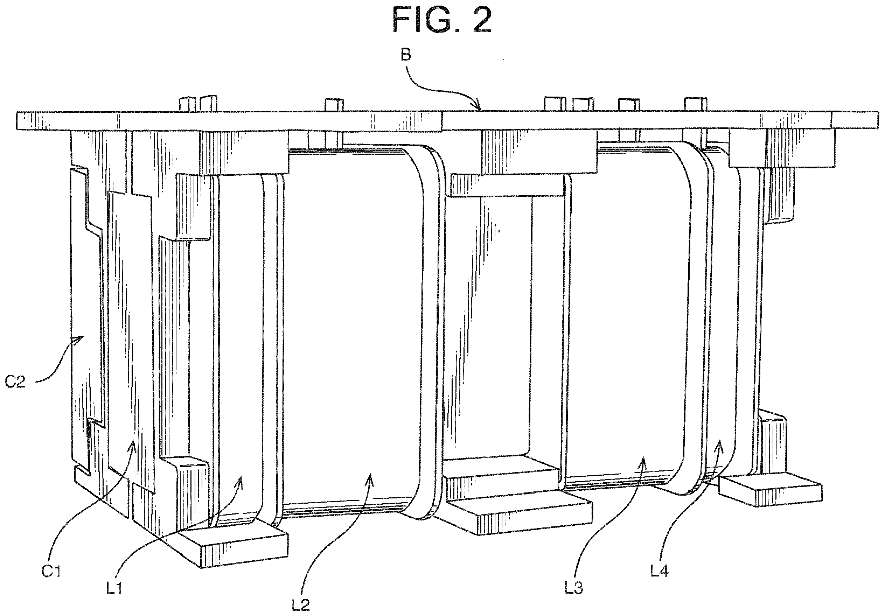

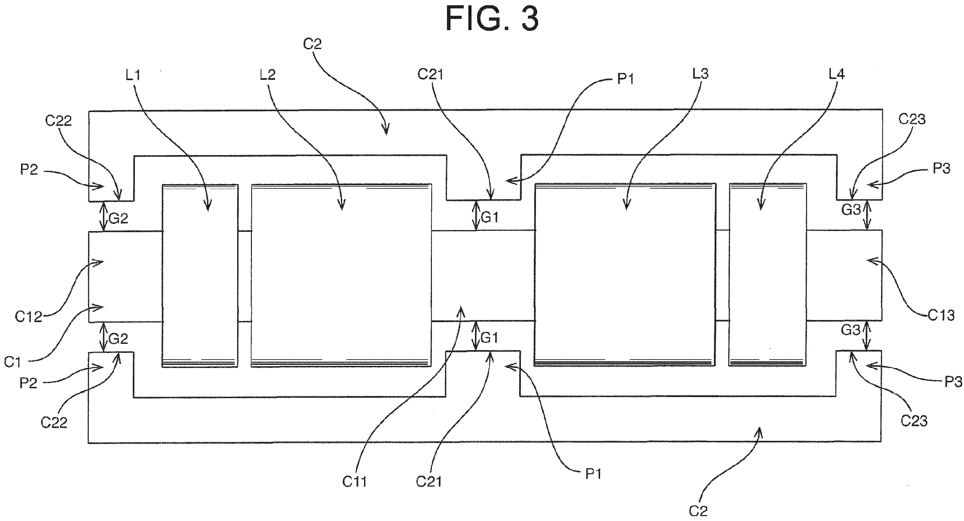

As shown in FIGS. 1 to 3, a coupling inductor according to an embodiment of the present invention includes a core having a central section C1 and two outer sections C2, a first coil L1, a second coil L2, a third coil L3, a fourth coil L4, and a substrate B. FIG. 1 shows an external view of the coupling inductor, and FIG. 2 shows the coupling inductor with one of the two outer sections C2 removed. FIG. 3 shows a relation between the central section C1 and the outer sections C2 of the core and the coils L1 to L4.

The first coil L1 has a first number of turns N1 and is wound around the central section C1 of the core between a first end C12 and a center portion C11 of the central section C1 of the core.

The second coil L2 has a second number of turns N2 which is larger than the first number N1 (N1 < N2), wherein the second coil L2 is wound in a direction opposite to that of the first coil L1 around the central section C1 of the core between the first end C12 and the center portion C11 of the central section C1 of the core. For example, the second coil L2 is arranged such that it is tightly coupled to the first coil L1.

The third coil L3 has a second number of turns N2 and is wound in a same direction as that of the first coil L1 around the central section C1 of the core between a second end C13 and the center portion C11 of the central section C1 of the core.

The fourth coil L4 has the first number of turns N1. The fourth coil L4 is wound in a direction opposite to that of the first coil L1 around the central section C1 of the core between the second end C13 and the center portion C11 of the central section C1 of the core. For example, the fourth coil L4 is arranged such that it is tightly coupled to the third coil L3.

The central section C1 and the outer sections C2 of the core are positioned such that gaps G1 are formed between the center portion C11 of the central section C1 and center portions C21 of the outer sections C2, gaps G2 are formed between the first end C12 of the central section C1 and first ends C22 of the outer sections C2, and gaps G3 are formed between the second end C13 of the central section C1 and second ends C23 of the outer sections C2. The gaps G2 have a same size as the gaps G3.

Preferably, the outer sections C2 have an E-shape which has protrusions P1, P2 and P3, as shown in FIG. 3. In the case of the outer sections C2 having an E-shape, the central section C1 preferably has an I-shape, for example. Instead of the outer sections C2, the central section C1 may have the protrusions P1, P2 and P3.

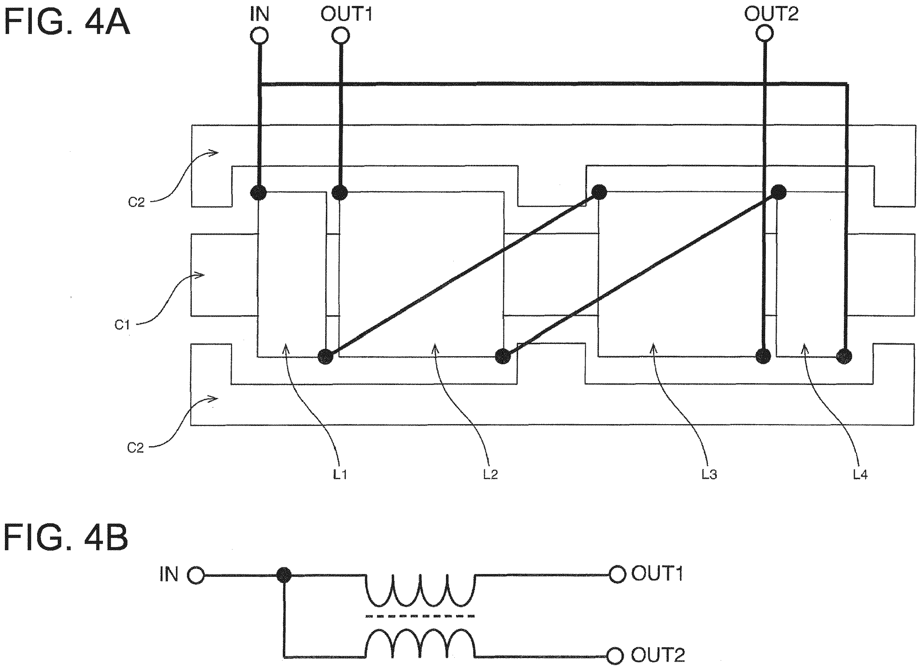

The coupling inductor according to the present embodiment is configured e.g. as a coupling inductor for an interleaved PFC circuit, wherein the core is configured as a ferrite core, for example. As shown in FIG. 4A, the coupling inductor according to the present embodiment is configured such that the first coil L1 is connected to the third coil L3 and the second coil L2 is connected to the fourth coil L4. In this manner, the coupling inductor according to the present embodiment forms a coupling inductor including inductors with a number of turns N (= N1 + N2) which are formed by the first coil L1 and the third coil L3 and by the second coil L2 and the fourth coil L4, respectively, as shown in FIG. 4B.

For example, connection of the first coil L1 to the third coil L3 as well as connection of the second coil L2 to the fourth coil L4 may be preferably provided via the substrate B. The substrate B may be a substrate dedicated for connection of coils, or may be a board for mounting another electronic device(s) thereon, such as a driving MOSFET.

<Comparison with a conventional coupling inductor>

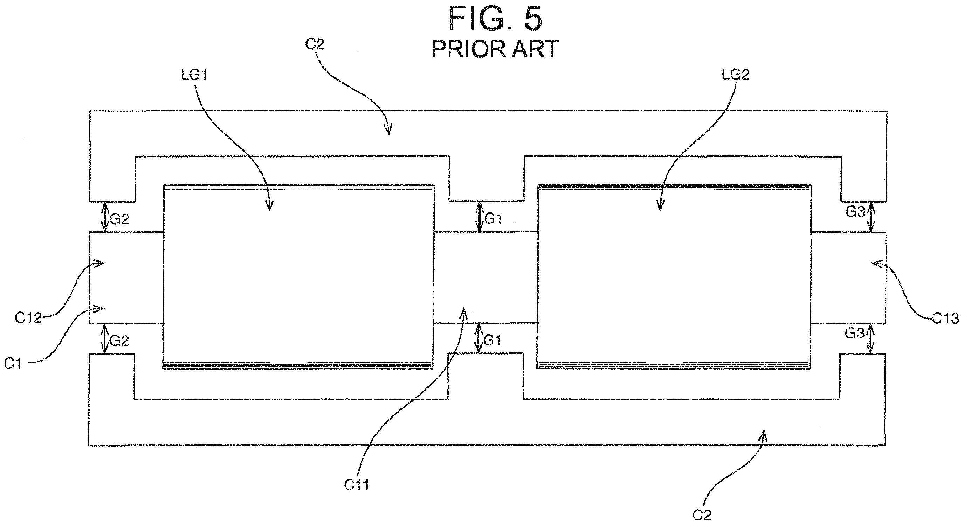

FIG. 5 shows an example of a conventional coupling inductor. Instead of the coils L1 to L4 of the coupling inductor according to the above-described embodiment, the conventional coupling inductor according to FIG. 5 includes coils LG1 and LG2, the coil LG1 having a number of turns NG and the coil LG2 having a same number of turns as the coil LG1, wherein the coil LG1 is wound around a central section C1 of a core between a center portion C11 and a first end C12 of the central section C1 of the core, and the coil LG2 is wound in a direction opposite to that of the coil LG1 around the central section C1 of the core between the center portion C11 and a second end C13 of the central section C1 of the core.

In order to reduce the coils LG1 and LG2 in size (i.e., a cross section of the central section C1 of the core) while maintaining parameters related to an electrical performance such as a ripple current in the conventional coupling inductor according to FIG. 5, it is necessary to increase the number of turns of the coils LG1 and LG2. If the coils LG1 and LG2 are reduced in size and the number of turns of the coils LG1 and LG2 are increased, this causes an abrupt increase of a magnetic flux density through the core. In this case, in order to prevent the magnetic flux density through the core from exceeding a saturation magnetic flux density of the core, it is necessary to increase the gaps G1 to G3 in size and thus increase magnetic resistances of the gaps G1 to G3. In other words, for reducing the cross section of the central section C1 of the core in the conventional coupling inductor, it is necessary to increase the gaps G1 to G3 in size. As a result, the conventional coupling inductor is difficult to be made compact as a whole.

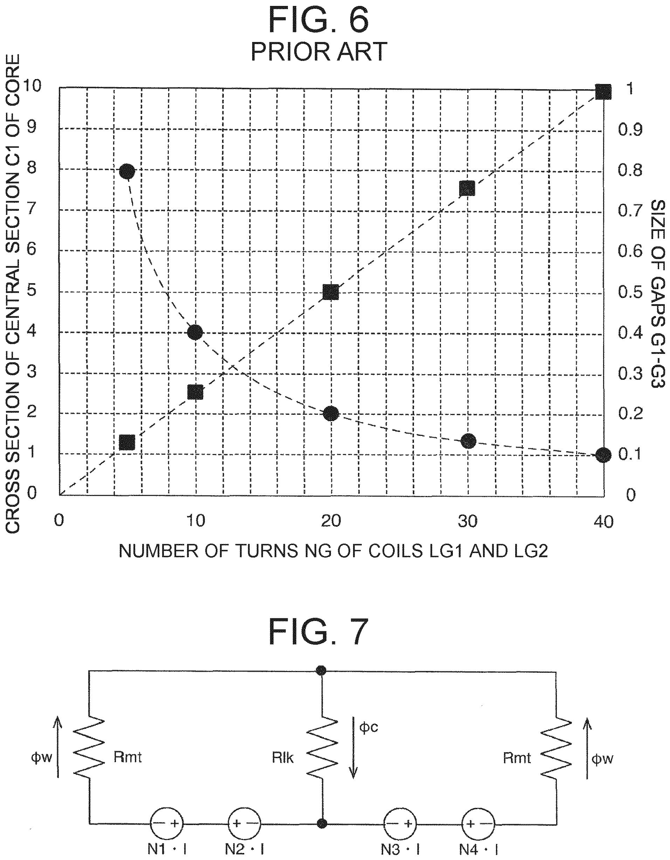

For determining the parameters related to the electrical performance such as ripple current and for the sake of simplicity, all the gaps G1 to G3 shall have a same size. Under this condition, if the number of turns NG of the coil LG1, LG2 is varied, the conventional coupling inductor demonstrates that the cross section of the central section C1 of the core and the size of the gaps G1 to G3 are changed, as shown in FIG. 6. In FIG. 6, circles indicate the change in the cross section of the central section C1 of the core, and squares indicate the change in the size of the gaps G1-G3. FIG. 6 further shows normalized values as the cross section of the central section C1 of the core, wherein the normalized values have been obtained by a cross section of the central section C1 of the core for the number of turns NG of the coils LG1 and LG2 of 40. Furthermore, FIG. 6 shows normalized values as the size of the gaps G1 to G3, wherein the normalized values have been obtained by a size of the gaps G1 to G3 for the number of turns NG of the coils LG1 and LG2 of 40.

In the conventional coupling inductor, as the number of turns NG of the coils LG1 and LG2 is increased, the cross section of central section C1 is decreased exponentially and the size of gap G1 to G3 is increased linearly, as shown in FIG. 6. For a number of turns NG of the coils LG1 and LG2 of 20, the gaps G1 to G3 of the conventional coupling inductor have a half size of the gaps G1 to G3 at a number of turns NG of the coils LG1 and LG2 of 40 (by a factor of 0.5). Furthermore, for the number of turns of 20, the central section C1 has a doubled cross section of the central section C1 of the core at the number of turns NG of the coils LG1 and LG2 of 40.

On the other hand, the coupling inductor according to the present embodiment includes two inductors which are each formed by two coils, wherein each of the two coils of one inductor is magnetically coupled to one of the coils of the other inductor. Therefore, the coupling inductor according to the present embodiment enables the magnetic flux through the core to be adjusted by varying a ratio of the numbers of turns N1 : N2 of the two coils which form each of the two inductors, wherein the adjustment can be accomplished without changing the individual numbers of turns N of the two inductors (N = N1 + N2).

FIG. 7 shows an equivalent magnetic circuit of the coupling inductor according to the present embodiment. If the first coil L1 and the second coil L2 are tightly coupled to each other and the third coil L3 and the fourth coil L4 are tightly coupled to each other, a magnetic flux $\varphi_c$ through a magnetic resistance of the gap G1 and a magnetic flux $\varphi_w$ through magnetic resistances of the gaps G2, G3, i.e., DC components of a magnetic flux in the core, are obtained according to the following formula:

$$\emptyset_w = \frac{\emptyset_c}{2} = (N2 - N1)\frac{I}{Rmt + 2Rlk}$$

wherein the magnetic resistance of the gap G1 is indicated by Rlk, the magnetic resistance of the gap G2 is indicated by Rmt, and a current flowing through the coils L1 to L4 is indicated by I.

This means that the coupling inductor according to the present embodiment enables the magnetic flux in the core to be reduced by reducing the second number of turns N2 without increasing the magnetic resistances of the gaps G1 to G3, i.e., without increasing the gaps G1 to G3 in size. This means that the coupling inductor according to the present embodiment enables the magnetic flux in the core to be reduced by adjusting the ratio of the numbers of turns of two inductors N1 : N2 which form each of the inductors, without increasing the gaps G1 to G3 in size. In this manner, it is possible to obtain compact inductors as compared to conventional coupling inductors.

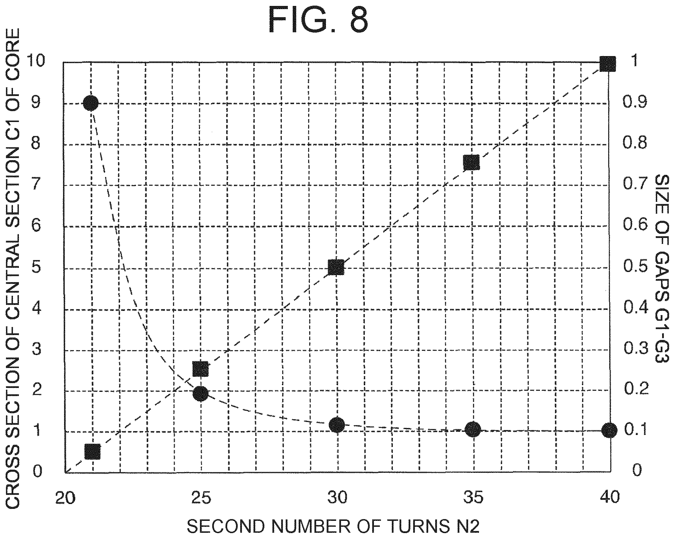

Under the same condition as in FIG. 6, if the ratio of the numbers of turns N1 : N2 of two inductors which form the inductor together is varied while maintaining a constant number of turns N of the inductor (N = N1 + N2), the coupling inductor according to the present embodiment demonstrates that the cross section of the central section C1 of the core and the size of the gaps G1 to G3 are changed, as shown in FIG. 8. In FIG. 8, circles indicate the change in the cross section of the central section C1 of the core in the case of varying the second number of turns N2, and squares indicate the change in the size of the gaps G1-G3 in the case of varying the second number of turns N2. FIG. 8 further shows normalized values as the cross section of the central section C1 of the core, wherein the normalized values have been obtained by a cross section of the central section C1 of the core for the second number of turns N2 of 40 (i.e., in the case where the first number of turns N1 is zero and each of two inductors is thus configured in a same manner as a conventional coupling inductor which is formed by a single coil). Furthermore, FIG. 8 shows normalized values as the size of the gaps G1 to G3, wherein the normalized values have been obtained by a size of the gaps G1 to G3 for the second number of turns N2 of 40.

The coupling inductor according to the present embodiment enables the size of the gaps G1 to G3 to be reduced by reducing the second number of turns N2, as shown in FIG. 8. Even when the second number of turns N2 is reduced, the cross section of the central section C1 of the core of the coupling inductor according to the present embodiment is only slightly increased. In the example of FIG. 8, for the second number of turns N2 of 30, the gaps G1 to G3 have a half size of the gaps G1 to G3 at the second number of turns N2 of 40 (by a factor of 0.5). In this case, the central section C1 of the core has a size which is only 1.15 times as large as a cross section of the central section C1 of the core for the second number of turns N2 of 40. This means that the coupling inductor according to the present embodiment enables inductors to be compact as compared with the conventional coupling inductor.

The present invention has been described above by means of the preferable embodiment thereof. Although the invention has been described herein by presenting a specific example, various modifications and changes may be made to such an example within the scope of the invention as set forth in the claims.

Reference Signs List

| C1 | Central section of a core |
| C11 | Center portion of the central section C1 of the core |
| C12 | First end of the central section C1 of the core |
| C13 | Second end of the central section C1 of the core |
| C2 | Outer section of the core |
| C21 | Center portions of the outer sections C2 of the core |
| C22 | First ends of the outer sections C2 of the core |
| C23 | Second ends of the outer sections C2 of the core |
| L1 | First coil |
| L2 | Second coil |
| L3 | Third coil |
| L4 | Fourth coil |
| G1-G3 | Gaps |
| B | Substrate |

**Claims**

1. A coupling inductor comprising:

   a magnetic core having a central section (C1) and an outer section (C2);
   a first coil (L1) wound around the central section (C1) between a first end (C12) and a center portion (C11) of the central section (C1);
   a second coil (L2) wound around the central section (C1) between the first coil (L1) and the center portion (C11),
   a third coil (L3) connected to the first coil (L1) and wound around the central section (C1) between a second end (C13) and the center portion (C11) of the central section (C1), and
   a fourth coil (L4) connected to the second coil (L2) and wound around the central section (C1) between the second end (C13) and the third coil (L3),
   wherein the first to fourth coils are all wound in a same geometrical
   winding direction seen from a same viewing direction,
   two inductors are formed by the first coil (L1) and the third coil (L3) and by the second coil (L2) and the fourth coil (L4), respectively, wherein each of the two coils of one inductor is magnetically coupled to a respective one of the coils of the other inductor,
   one end of the first coil (L1) facing the first end (C12) is connected to an input section (IN), another end of the first coil (L1) facing the center portion (C11) is connected to one end of the third coil (L3) facing the center portion (C11), and another end of the third coil (L3) facing the second end (C13) is connected to an output section (OUT2), and

   one end of the fourth coil (L4) facing the second end (C13) is connected to the input section, another end of the fourth coil (L4) facing the center portion (C11) is connected to one end of the second coil (L2) facing the center portion (C11), and another end of the second coil (L2) facing the first end (C12) is connected to another output section (OUT1).

2. The coupling inductor according to claim 1, wherein the central section (C1) and the outer section (C2) are positioned such that a gap (G1) exists between the center portion (C11) of the central section (C1) and a center portion (C21) of the outer section (C2), a gap (G2) exists between the first end (C12) of the central section (C1) and a first end (C22) of the outer section (C2), and a gap (G3) exists between the second end (C13) of the central section (C1) and a second end (C23) of the outer section (C2).

3. The coupling inductor according to claim 2, wherein the central section (C1) has an I-shape and the outer section (C2) has an E-shape.

4. The coupling inductor according to any one of claims 1 to 3, wherein the first coil (L1) and the second coil (L2) are tightly coupled to each other.

5. The coupling inductor according to any one of claims 1 to 4, wherein the third coil (L3) and the fourth coil (L4) are tightly coupled to each other.

6. A power factor correction circuit comprising the coupling inductor according to any of claims 1 to 5.

**Patentansprüche**

1. Ein Kopplungsinduktor, umfassend:

   einen magnetischen Kern mit einem zentralen Abschnitt (C1) und einem äußeren Abschnitt (C2);
   eine erste Spule (L1), die um den zentralen Abschnitt (C1) zwischen einem ersten Ende (C12) und einem Zentrumsteil (C11) des zentralen Abschnitts (C1) gewickelt ist;
   eine zweite Spule (L2), die um den zentralen Abschnitt (C1) zwischen der ersten Spule (L1) und dem Zentrumsteil (C11) gewickelt ist,
   eine dritte Spule (L3), die mit der ersten Spule (L1) verbunden ist und um den zentralen Abschnitt (C1) zwischen einem zweiten Ende (C13) und dem Zentrumsteil (C11) des zentralen Abschnitts (C1) gewickelt ist, und

eine vierte Spule (L4), die mit der zweiten Spule (L2) verbunden ist und um den zentralen Abschnitt (C1) zwischen dem zweiten Ende (C13) und der dritten Spule (L3) gewickelt ist,

wobei die erste bis vierte Spule alle in einer selben geometrischen Wickelrichtung, von einer selben Sichtrichtung gesehen, gewickelt sind, wobei

zwei Induktoren jeweils von der ersten Spule (L1) und der dritten Spule (L3) und von der zweiten Spule (L2) und der vierten Spule (L4) gebildet sind, wobei jede der zwei Spulen eines Induktors magnetisch mit einer jeweiligen der Spulen des anderen Induktors gekoppelt ist,

ein Ende der ersten Spule (L1), das dem ersten Ende (C12) zugewandt ist, mit einem Eingangsabschnitt (IN) verbunden ist,

ein anderes Ende der ersten Spule (L1), das dem Zentrumsteil (C11) zugewandt ist, mit einem Ende der dritten Spule (L3) verbunden ist, das dem Zentrumsteil (C11) zugewandt ist, und ein anderes Ende der dritten Spule (L3), das dem zweiten Ende (C13) zugewandt ist, mit einem Ausgangsabschnitt (OUT2) verbunden ist, und

ein Ende der vierten Spule (L4), das dem zweiten Ende (C13) zugewandt ist, mit dem Eingangsabschnitt verbunden ist, ein anderes Ende der vierten Spule (L4), das dem Zentrumsteil (C11) zugewandt ist, mit einem Ende der zweiten Spule (L2) verbunden ist, das dem Zentrumsteil (C11) zugewandt ist, und ein anderes Ende der zweiten Spule (L2), das dem ersten Ende (C12) zugewandt ist, mit einem anderen Ausgangsabschnitt (OUT1) verbunden ist.

2. Der Kopplungsinduktor nach Anspruch 1,
wobei der zentrale Abschnitt (C1) und der äußere Abschnitt (C2) so positioniert sind, dass ein Spalt (G1) zwischen dem Zentrumsteil (C11) des zentralen Abschnitts (C1) und einem Zentrumsteil (C21) des äußeren Abschnitts (C2) existiert, ein Spalt (G2) zwischen dem ersten Ende (C12) des zentralen Abschnitts (C1) und einem ersten Ende (C22) des äußeren Abschnitt (C2) existiert, und ein Spalt (G3) zwischen dem zweiten Ende (C13) des Zentrumsteil (C1) und einem zweiten Ende (C23) des äußeren Abschnitts (C2) existiert.

3. Der Kopplungsinduktor nach Anspruch 2,
wobei der zentrale Abschnitt (C1) eine I-Form aufweist und der äußere Abschnitt (C2) eine E-Form aufweist.

4. Der Kopplungsinduktor nach irgendeinem der Ansprüche 1 bis 3,
wobei die erste Spule (L1) und die zweite Spule (L2) fest miteinander gekoppelt sind.

5. Der Kopplungsinduktor nach irgendeinem der Ansprüche 1 bis 4,
wobei die dritte Spule (L3) und die vierte Spule (L4) fest miteinander gekoppelt sind.

6. Eine Leistungsfaktorkorrekturschaltung, umfassend den Kopplungsinduktor nach irgendeinem der Ansprüche 1 bis 5.

**Revendications**

1. Inducteur de couplage comprenant :

un noyau magnétique ayant une section centrale (C1) et une section externe (C2) ;
une première bobine (L1) enroulée autour de la section centrale (C1) entre une première extrémité (C12) et une partie centrale (C11) de la section centrale (C1);
une deuxième bobine (L2) enroulée autour de la section centrale (C1) entre la première bobine (L1) et la partie centrale (C11),
une troisième bobine (L3) reliée à la première bobine (L1) et enroulée autour de la section centrale (C1) entre une deuxième extrémité (C13) et la partie centrale (C11) de la section centrale (C1), et
une quatrième bobine (L4) reliée à la deuxième bobine (L2) et enroulée autour de la section centrale (C1) entre la deuxième extrémité (C13) et la troisième bobine (L3),
dans lequel les première à quatrième bobines sont toutes enroulées dans une même direction d'enroulement géométrique en regardant depuis une même direction de visualisation, dans lequel
deux inducteurs sont formés respectivement par la première bobine (L1) et la troisième bobine (L3) et par la deuxième bobine (L2) et la quatrième bobine (L4), où chacune des deux bobines d'un inducteur est couplée magnétiquement à une bobine respectivement des bobines de l'autre inducteur,
une extrémité de la première bobine (L1) faisant face à la première extrémité (C12) est reliée à une section d'entrée (IN),
une autre extrémité de la première bobine (L1) faisant face à la partie centrale (C11) est reliée à une extrémité de la troisième bobine (L3) faisant face à la partie centrale (C11), et une autre extrémité de la troisième bobine (L3) faisant face à la deuxième extrémité (C13) est reliée à une section de sortie (OUT2), et
une extrémité de la quatrième bobine (L4) faisant face à la deuxième extrémité (C13) est reliée à la section d'entrée, une autre extrémité de la quatrième bobine (L4) faisant face à la partie centrale (C11) est reliée à une extrémité de la deuxième bobine (L2) faisant face à la partie centrale (C11), et une autre extrémité de la deuxième bobine (L2) faisant face à la première extrémité (C12) est reliée à une autre section de sortie (OUT1).

2. Inducteur de couplage selon la revendication 1, dans lequel la section centrale (C1) et la section externe (C2) sont positionnées de sorte qu'un espace (G1) existe entre la partie centrale (C11) de la section centrale (C1) et une partie centrale (C21) de la section externe (C2), qu'un espace (G2) existe entre la première extrémité (C12) de la section centrale (C1) et une première extrémité (C22) de la section externe (C2), et qu'un espace (G3) existe entre la deuxième extrémité (C13) de la section centrale (C1) et une deuxième extrémité (C23) de la section externe (C2).

3. Inducteur de couplage selon la revendication 2, dans lequel la section centrale (C1) a une forme en I et la section externe (C2) a une forme en E.

4. Inducteur de couplage selon l'une quelconque des revendications 1 à 3, dans lequel la première bobine (L1) et la deuxième bobine (L2) sont étroitement couplées l'une à l'autre.

5. Inducteur de couplage selon l'une quelconque des revendications 1 à 4, dans lequel la troisième bobine (L3) et la quatrième bobine (L4) sont étroitement couplées l'une à l'autre.

6. Circuit de correction de facteur de puissance comprenant l'inducteur de couplage selon l'une des revendications 1 à 5.

FIG. 1

FIG. 2

EP 4 152 353 B1

FIG. 3

FIG. 4A

FIG. 4B

EP 4 152 353 B1

# FIG. 5
## PRIOR ART

EP 4 152 353 B1

# FIG. 6
## PRIOR ART

# FIG. 7

# FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 104410257 B
- WO 2021168797 A1
- JP 2021019030 A
- JP 2015201642 A